# EUROPÄISCHE PATENTSCHRIFT

(11) **EP 3 028 560 B1**
(45) Veröffentlichungstag und Bekanntmachung des Hinweises auf die Patenterteilung: **18.10.2017**
(21) Anmeldenummer: 15195623.2
(22) Anmeldetag: 20.11.2015
(51) Int. Cl.: A01F 12/24

(54) **DRESCHKORBANORDNUNG FÜR EINEN MÄHDRESCHER**
CONCAVE ASSEMBLY FOR A COMBINE HARVESTER
SYSTÈME DE CONTRE-BATTEUR DE MOISSONNEUSE-BATTEUSE

(30) Priorität: 03.12.2014 DE 102014224780
(43) Veröffentlichungstag der Anmeldung: 08.06.2016
(73) Patentinhaber: Deere & Company, Moline, IL 61265 (US)
(72) Erfinder: Hess, Wolfgang, 66877 Ramstein (DE)
(74) Vertreter: Holst, Sönke

(56) Entgegenhaltungen:
- EP-A1- 0 513 574
- EP-A1- 2 036 425
- DE-B- 1 130 640
- DE-B- 1 130 641

## Beschreibung

Die Erfindung betrifft eine Dreschkorbanordnung für einen Mähdrescher, mit einem Dreschkorb und einer dem Dreschkorb eingangsseitig vorgelagerten Erntegutbearbeitungseinrichtung, die einen Körper mit an der Oberfläche des Körpers angeordneten Vorsprüngen umfasst, wobei der Körper um eine sich entlang der Eingangsseite des Dreschkorbs erstreckende Schwenkachse zwischen einer ersten Position, in der die Vorsprünge mit Erntegut zusammenwirken, und einer zweiten Position, in der eine glatte Führungsfläche des Körpers mit dem Erntegut zusammenwirkt, drehbar und in den besagten Positionen arretierbar ist, und an der Eingangsseite des Dreschkorbs ein Abstreifer angeordnet ist, der sich bis zu einer unmittelbar stromab des Körpers gelegenen Position erstreckt.

### Stand der Technik

Landwirtschaftliche Mähdrescher sind große Maschinen, die landwirtschaftlich angebautes Erntegut, das Korn trägt, ernten, dreschen, trennen und reinigen. Das erhaltene saubere Korn wird in einem am Mähdrescher angeordneten Korntank gespeichert. Zum Dreschen dienen in der Regel Tangentialdrescheinrichtungen mit einem Dreschkorb und einer das Erntegut tangential fördernden Dreschtrommel oder das Erntegut axial fördernde Axialdrescheinrichtungen mit Axialdreschrotoren, die ebenfalls mit einem Dreschkorb zusammenwirken. Die Dreschkörbe setzen sich aus Bogen- und Querleisten zusammen, die zwischen sich Zwischenräume belassen. Der Dreschkorb umgibt die Dreschtrommel über einen Teil ihres Umfangs und schließt mit ihr einen Spalt ein, durch den das zu dreschende Erntegut gezwängt wird. Während das Erntegut durch den Spalt gefördert wird, scheiden sich Erntegutteile (das Korn) ab, fallen durch die Zwischenräume und werden einer Reinigungseinrichtung zugeführt. Aufgrund der Beschaffenheit des Ernteguts lassen sich Bestandteile mehr oder weniger gut herauslösen, so dass es sinnvoll ist, die Dreschkörbe dem jeweiligen Erntegut anpassen zu können.

Die DE 1 130 641 A beschreibt einen Dreschkorb mit einer vorderen Dreschkorbverlängerung mit U-förmigem Querschnitt, die um eine sich parallel zur Drehachse der Dreschtrommel erstreckende Achse schwenkbar ist, um sie zwischen einer aktiven Position und einer inaktiven Position bewegen zu können. Der mittlere Schenkel des U wirkt in der aktiven Position dreschend mit dem Erntegut zusammen, während die in der inaktiven Position um 180° gedrehte Dreschkorbverlängerung dann als Steinfalle dient. Als nachteilig ist hierbei anzusehen, dass der Übergang des Ernteguts vom Schrägförderer zum Dreschkorb bei inaktiver Dreschkorbverlängerung aufgrund der sich dann ergebenden, durch die nach unten verschwenkte Dreschkorbverlängerung bedingte Vertiefung problematisch ist.

Die DE 1 130 640 A beschreibt eine vordere Dreschkorbverlängerung für einen Mähdrescher, die um eine sich parallel zur Dreschtrommelachse erstreckende Achse schwenkbar angelenkt ist. In einer Position verlängert die Dreschkorbverlängerung den Dreschkorb nach vorn, und in einer nach unten verschwenkten, zweiten Position bildet eine glatte Führungsfläche eine vordere Überbrückung einer Steinfalle. Hier liegt bei der zweiten Position zwischen der Führungsfläche und dem Dreschkorb eine als Steinfalle dienende Lücke vor, während die Lücke bei aktiver Dreschkorbverlängerung vor der Dreschkorbverlängerung liegt. Dann bildet die Dreschkorbverlängerung eine vordere Kante, die den Erntegutfluss behindert.

Die US 1 334 910 A zeigt einen Dreschkorb, bei dem im Wesentlichen rechteckig gestaltete Elemente um ihre Längsachsen drehbar sind, sodass eine erste, glatte Fläche und eine zweite, mit Zähnen ausgestattete Fläche wahlweise mit dem Erntegut in Eingriff gebracht werden können. Zwischen benachbarten Elementen und dem nachfolgenden, ortsfesten Dreschkorbbelag verbleiben jeweils Lücken, in denen sich Erntegut ansammeln und den Erntegutfluss behindern kann.

Schließlich zeigt die als gattungsbildend angesehene EP 2 036 425 A1 eine Dreschkorbanordnung mit einem am Einlass des Dreschkorbs angeordneten, kreiszylindrischen Körper, der in verschiedenen Drehstellungen arretierbar ist: einer ersten Stellung, in der ein rein kreiszylindrischer Bereich mit dem Erntegut zusammenwirkt und einer zweiten Stellung, in der ein ebenfalls kreiszylindrischer Bereich des Körpers mit dem Erntegut zusammenwirkt, welcher jedoch mit Entgrannerleisten mit Rippen und dazwischen angeordneten Aussparungen besetzt ist. Ein vorderer Abstreifer des Dreschkorbs ist unmittelbar stromab des Körpers angeordnet. Als nachteilig ist hierbei anzusehen, dass entweder relativ große Verstellkräfte zum Drehen des Körpers zwischen der ersten und zweiten Stellung aufzubringen sind, wenn der Abstreifer direkt auf dem Körper aufliegt, sodass die Reibungskräfte zu überwinden sind und auch ein gewisser Verschleiß entsteht, oder dass ein ungewünschter Spalt zwischen dem Körper und dem Abstreifer verbleibt.

### Aufgabe der Erfindung

Die der Erfindung zu Grunde liegende Aufgabe wird darin gesehen, eine Dreschkorbanordnung eingangs genannter Art für einen Mähdrescher bereitzustellen, bei dem die erwähnten Probleme nicht oder in vermindertem Maße vorliegen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Dreschkorbanordnung für einen Mähdrescher setzt sich aus einem Dreschkorb und einer dem Dreschkorb eingangsseitig vorgelagerten Erntegutbearbeitungseinrichtung zusammen, die einen Körper mit an der Oberfläche des Körpers angeordneten Vorsprüngen umfasst. Der Körper ist um eine sich entlang der Eingangsseite des Dreschkorbs erstreckende Schwenkachse zwischen einer ersten Position, in der die Vorsprünge mit Erntegut zusammenwirken, und einer zweiten Position, in der eine glatte Führungsfläche des Körpers mit dem Erntegut zusammenwirkt, drehbar und in den besagten Positionen arretierbar. An der Eingangsseite des Dreschkorbs ist ein Abstreifer angeordnet, der sich bis zu einer unmittelbar stromab des Körpers gelegenen Position erstreckt. Der Körper ist derart geformt, dass er in der ersten Position vom Abstreifer beabstandet ist und in der zweiten Position am Abstreifer anliegt.

Mit anderen Worten entsteht in der ersten Position des Körpers, in welcher die Vorsprünge mit dem Erntegut im Eingriff sind, ein gewisser Spalt zwischen dem Körper und dem Abstreifer. Dieser Spalt macht sich in dieser Position nicht störend bemerkbar, da die Vorsprünge dafür sorgen, dass der größte Teil des Ernteguts überhaupt nicht mit dem Abstreifer in Kontakt kommt. Der Spalt ermöglicht es jedoch, den Körper mit relativ geringen Verstellkräften um die Schwenkachse in die zweite Position zu drehen, in welcher nur die glatte Führungsfläche des Körpers im Eingriff mit dem Erntegut ist. In dieser zweiten Position liegt der Körper dichtend am Abstreifer an, sodass kein Spalt mehr zwischen dem Abstreifer und dem Körper vorhanden ist, in dem sich unerwünschtes Erntegut ansammeln und den Erntegutfluss stören könnte.

Der Körper kann insbesondere derart geformt sein, dass er in seiner zweiten Position den Abstreifer nach außen verformt. Auch kann der Körper derart geformt sein, dass er erst gegen Ende seines Verstellwegs in die zweite Position mit dem Abstreifer in Anlage gerät.

Bei einer möglichen Ausführungsform weist der Körper einen stromab liegenden, in sich gekrümmten Bereich auf, der in der zweiten Position am Abstreifer anliegt, und einen stromauf liegenden Bereich, an dem die Vorsprünge angebracht sind. Der Körper kann in dem Bereich, an dem die Vorsprünge angebracht sind, in sich flach sein. In seinem stromab liegenden, in sich gekrümmten Bereich kann der Körper hingegen konzentrisch zu einer Achse sein, die gegenüber der Schwenkachse versetzt ist, insbesondere in der Gutflussrichtung nach hinten.

Der Abstreifer kann als winkelförmiges Blech ausgeführt sein, dessen einer Schenkel sich tangential zur Gutflussrichtung bis zur unmittelbar stromab des Körpers gelegenen Position erstreckt und dessen anderer Schenkel sich parallel zu einer an der Eingangsseite des Dreschkorbs angebrachten Dreschleiste erstreckt und mit dieser Dreschleiste verbunden ist.

Die Dreschkorbanordnung kann mit einer tangential fördernden Dreschtrommel oder einem axial fördernden Axialdreschrotor zusammenwirken.

### Ausführungsbeispiele

Anhand der Abbildungen wird ein Ausführungsbeispiel der Erfindung erläutert. Es zeigt:
- Fig. 1: eine teilgeschnittene seitliche Ansicht eines Mähdreschers mit einer Dreschkorbanordnung,

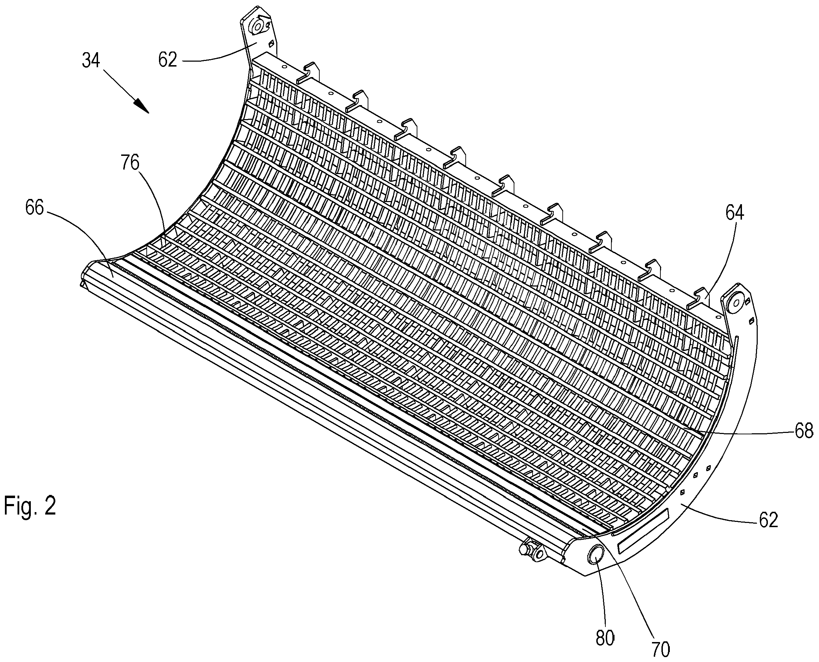

- Fig. 2: eine perspektivische Ansicht der Dreschkorbanordnung aus Figur 1,
- Fig. 3: eine vergrößerte seitliche perspektivische Ansicht der Dreschkorbanordnung aus Figur 2, in der sich der Körper der eingangsseitigen Erntegutbearbeitungsvorrichtung in seiner zweiten Position befindet,
- Fig. 4: eine seitliche Ansicht der Erntegutbearbeitungseinrichtung aus Figur 2, und
- Fig. 5: eine seitliche Ansicht der Erntegutbearbeitungseinrichtung aus Figur 2, jedoch bei in der ersten Position befindlichem Körper.

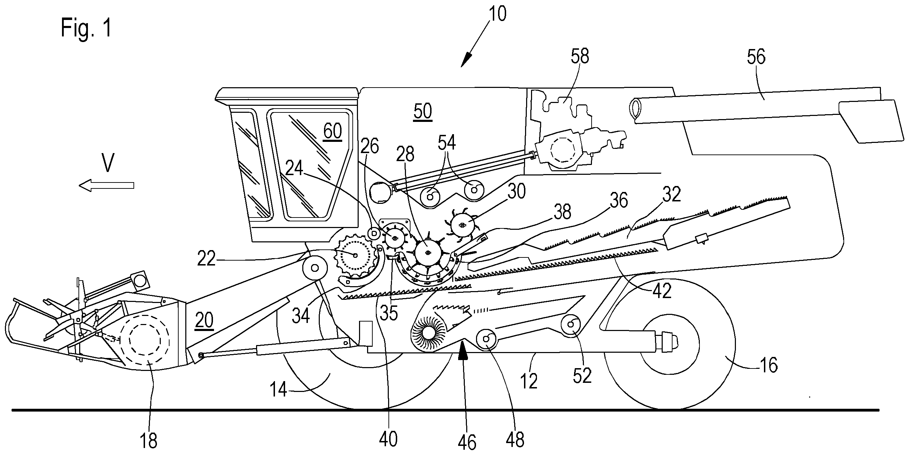

Die Figur 1 zeigt einen selbstfahrenden Mähdrescher 10 mit einem Rahmen 12, der sich über vordere, angetriebene und hintere lenkbare Räder 14 auf dem Boden abstützt und von diesen fortbewegt wird. Die Räder 14 werden mittels nicht gezeigter Antriebsmittel in Drehung versetzt, um den Mähdrescher 10 z.B. über ein abzuerntendes Feld zu bewegen.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder anderen, dreschbaren Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, eine Abscheidetrommel 28 sowie einen Abgabeförderer 30 umfasst. Stromab des Abgabeförderers 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb der Abscheidetrommel 28 ein Abscheidekorb 36 mit verstellbaren Fingerelementen befindet. Unterhalb des unterschlächtig fördernden Abgabeförderers 30 ist ein Trennrost 38 angeordnet.

Unterhalb des Mehrtrommeldreschwerks befindet sich ein vorderer Förderboden 40. Ein hinterer Förderboden 42 ist unterhalb des Strohschüttlers 32 angeordnet. Die Förderböden 40, 42 transportieren das Gemisch aus Korn, Kurzstroh und Spreu vom Dreschkorb 34, vom Abscheidekorb 46 und vom Trennrost 38 sowie vom Strohschüttler 32 zu einer Reinigungseinrichtung 46. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Bei einer anderen Ausführungsform könnte das Dreschwerk auch nur die Dreschtrommel 22, die Abstreifertrommel 24 und den Abgabeförderer 30 umfassen, d.h. als konventionelles Tangentialdreschwerk ohne Abscheidetrommel 28 und ohne Fördertrommel 26 ausgeführt sein, bei dem der Abgabeförderer 30 direkt der Dreschtrommel 22 folgt. Im Folgenden beziehen sich alle Richtungsangaben, wie vorn, hinten, ober- und unterhalb auf die Vorwärtsfahrtrichtung V des Mähdreschers 10.

Der Dreschkorb 34 an sich ist von konventioneller Konstruktion und umfasst zwei bogenförmige, an den Radius der Dreschtrommel 22 angepasste Seitenwangen 62, zwischen denen sich Dreschleisten 68 erstrecken. In Umfangsrichtung der Dreschtrommel 22 umfasst der Dreschkorb 34 weitere Bogenleisten 64, zwischen denen Korbdrähte 76 angeordnet sind.

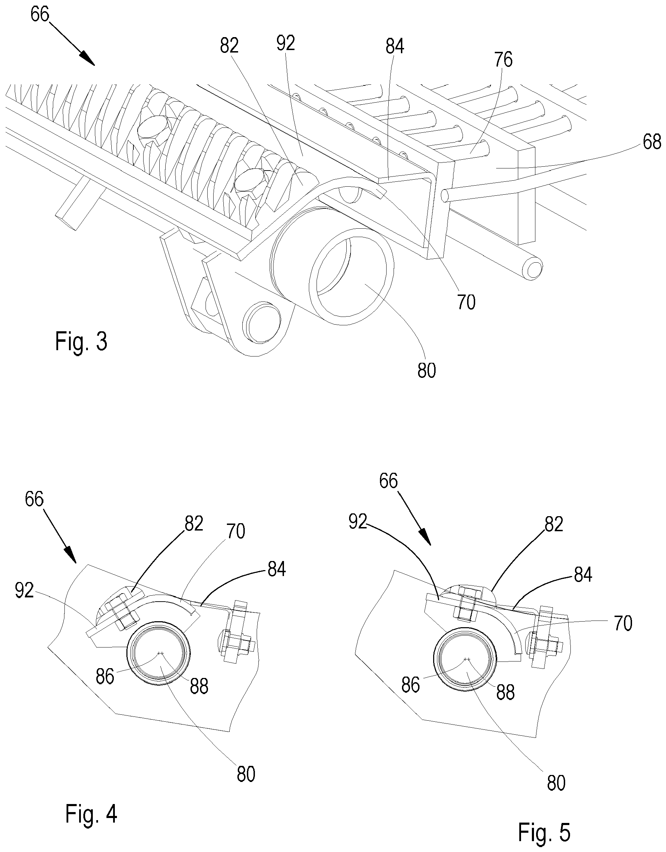

Dem Dreschkorb 34 ist bezüglich der Flussrichtung des Ernteguts eine Erntegutbearbeitungseinrichtung vorgeordnet. Die Erntegutbearbeitungseinrichtung umfasst einen Körper 66, der an einer schwenkbaren Welle 80 befestigt und in einer ersten Position (vgl. Figur 5) und einer zweiten Position (vgl. Figuren 3 und 4) arretierbar ist und in seinem stromab liegenden Bereich eine glatte Führungsfläche 70 aufweist. Unmittelbar stromab des Körpers 66 folgt ein winkelförmiger Abstreifer 84, dessen hinterer, vertikaler Schenkel an der eingangsseitigen Dreschleiste 68 des Dreschkorbs 34 befestigt ist und dessen vorderer, etwa horizontaler Schenkel sich von der Dreschleiste 68 nach vorn bis zu einer unmittelbar stromab des Körpers 66 gelegenen Position am vorderen Ende des Abstreifers 84 erstreckt.

Wie am besten anhand der Figuren 3 bis 5 erkennbar ist, umfasst der Körper 66 ein sich axial erstreckendes Blech 92, das an der Welle 80 befestigt ist. Das Blech 92 trägt in seinem vorderen Bereich eine so genannte Entgranner- oder Intensivdreschleiste 82 mit Vorsprüngen oder Rippen und dazwischen angeordneten Vertiefungen. Das Blech 92 bildet in seinem rückwärtigen Bereich die glatte Führungsfläche 70. In seinem vorderen Bereich mit der Entgranner- oder Intensivdreschleiste 82 ist das Blech 92 in sich flach geformt und im Bereich der Führungsfläche 70 ist das Blech 92 kreiszylindrisch in sich gebogen mit einer gedachten Achse 88, die gegenüber der Schwenkachse 86 der Welle 80 nach hinten versetzt ist, vgl. die Figuren 4 und 5. In seiner ersten, in Figur 5 gezeigten Position, in welcher die Entgranner- oder Intensivdreschleiste 82 im Guteingriff ist (und mit ihrer rückwärtigen Kante am Abstreifer 84 anliegt), und in der zweiten, in den Figuren 3 und 4 gezeigten Position, in welcher nur die glatte Führungsfläche im Guteingriff ist, wird der Körper 66 arretiert. Die Schwenkbewegung kann mittels eines geeigneten Aktors oder manuell durch die Bedienungsperson vorgenommen werden, wobei geeignete Übertragungsmittel vorgesehen sein können, mit denen die Schwenkbewegung manuell oder fremdkraftbetätigt aus der Fahrerkabine 60 bewerkstelligt werden kann. Die Erntegutbearbeitungseinrichtung 56 ist zwischen den Seitenwangen 62 in deren vorderem Bereich angeordnet.

Die exzentrische Anordnung der Achse 88 gegenüber der Schwenkachse 86 führt dazu, dass das Blech 92 in der ersten Position vom Abstreifer 84 beabstandet ist (s. Figur 5), in der zweiten Position (Figur 4) jedoch am Abstreifer 84 anliegt und diesen nach oben biegt, sodass dann eine dichtende Wirkung erzielt wird, die Schwenkbewegung jedoch über den größten Bereich des Verstellwegs (bis kurz vor Erreichen der zweiten Position) ohne größere Reibung durchführbar ist.

## Patentansprüche

1. Dreschkorbanordnung für einen Mähdrescher (10), mit einem Dreschkorb (34) und einer dem Dreschkorb (34) eingangsseitig vorgelagerten Erntegutbearbeitungseinrichtung, die einen Körper (66) mit an der Oberfläche des Körpers (66) angeordneten Vorsprüngen umfasst, wobei der Körper (66) um eine sich entlang der Eingangsseite des Dreschkorbs (34) erstreckende Schwenkachse (86) zwischen einer ersten Position, in der die Vorsprünge mit Erntegut zusammenwirken, und einer zweiten Position, in der eine glatte Führungsfläche (70) des Körpers (66) mit dem Erntegut zusammenwirkt, drehbar und in den besagten Positionen arretierbar ist, und an der Eingangsseite des Dreschkorbs (34) ein Abstreifer (84) angeordnet ist, der sich bis zu einer unmittelbar stromab des Körpers (66) gelegenen Position erstreckt, **dadurch gekennzeichnet, dass** der Körper (66) derart geformt ist, dass er in der ersten Position vom Abstreifer (84) beabstandet ist und in der zweiten Position am Abstreifer (84) anliegt.

2. Dreschkorbanordnung nach Anspruch 1, wobei der Körper (66) derart geformt ist, dass er in seiner zweiten Position den Abstreifer (84) nach außen verformt.

3. Dreschkorbanordnung nach Anspruch 1 oder 2, wobei der Körper (66) derart geformt ist, dass er erst gegen Ende seines Verstellwegs in die zweite Position mit dem Abstreifer (84) in Anlage gerät.

4. Dreschkorbanordnung nach einem der Ansprüche 1 bis 3, wobei der Körper (66) einen stromab liegenden, in sich gekrümmten Bereich aufweist, der in der zweiten Position am Abstreifer (84) anliegt und die glatte Führungsfläche 84 bildet, und einen stromauf liegenden Bereich, an dem die Vorsprünge angebracht sind.

5. Dreschkorbanordnung nach Anspruch 4, wobei der Körper (66) in dem Bereich, an dem die Vorsprünge angebracht sind, in sich flach ist.

6. Dreschkorbanordnung nach Anspruch 4 oder 5, wobei der Körper (66) in seinem stromab liegenden, in sich gekrümmten Bereich konzentrisch zu einer Achse ist (88), die gegenüber der Schwenkachse (86) versetzt ist.

7. Dreschkorbanordnung nach Anspruch 6, wobei die Achse (88) gegenüber der Schwenkachse (86) in Gutflussrichtung nach hinten versetzt ist.

8. Dreschkorbanordnung nach einem der vorhergehenden Ansprüche, wobei der Abstreifer (84) als winkelförmiges Blech ausgeführt ist, dessen einer Schenkel sich tangential zur Gutflussrichtung bis zur unmittelbar stromab des Körpers (66) gelegenen Position erstreckt und dessen anderer Schenkel sich parallel zu einer an der Eingangsseite des Dreschkorbs (34) angebrachten Dreschleiste (68) erstreckt und mit dieser Dreschleiste (68) verbunden ist.

9. Mähdrescher (10) mit einer Dreschkorbanordnung nach einem der Ansprüche 1 bis 8, welche mit einer tangential fördernden Dreschtrommel (22) oder einem axial fördernden Axialdreschrotor zusammenwirkt.

## Claims

1. Threshing cage arrangement for a combine harvester (10), with a threshing cage (34) and a crop processing device which is mounted upstream on the input side of the threshing cage (34) and comprises a body (66) with projections arranged on the surface of the body (66), wherein the body (66) is rotatable about a pivot axis (86), which extends along the input side of the threshing cage (34), between a first position, in which the projections interact with crop, and a second position, in which a smooth guide surface (70) of the body (66) interacts with the crop, and is lockable in said positions, and a scraper (84) is arranged on the input side of the threshing cage (34), said scraper extending as far as a position placed directly downstream of the body (66), **characterized in that** the body (66) is shaped in such a manner that it is spaced apart from the scraper (84) in the first position and lies against the scraper (84) in the second position.

2. Threshing cage arrangement according to Claim 1, wherein the body (66) is shaped in such a manner that, in its second position, it outwardly deforms the scraper (84).

3. Threshing cage arrangement according to Claim 1 or 2, wherein the body (66) is shaped in such a manner that only towards the end of its adjustment travel into the second position does it enter into contact with the scraper (84).

4. Threshing cage arrangement according to one of Claims 1 to 3, wherein the body (66) has a region which is located downstream, is curved per se and, in the second position, lies against the scraper (84) and forms the smooth guide surface (84), and a region which is located upstream and to which the projections are attached.

5. Threshing cage arrangement according to Claim 4, wherein the body (66) is flat per se in the region to which the projections are attached.

6. Threshing cage arrangement according to Claim 4 or 5, wherein the body (66), in its region located downstream and curved per se, is concentric with respect to an axis (88) which is offset in relation to the pivot axis (86).

7. Threshing cage arrangement according to Claim 6, wherein the axis (88) is offset to the rear in the direction of flow of material in relation to the pivot axis (86).

8. Threshing cage arrangement according to one of the preceding claims, wherein the scraper (84) is designed as an angular plate, the one limb of which extends tangentially to the direction of flow of material as far as the position placed directly downstream of the body (66) and the other limb of which extends parallel to a threshing bar (68) attached to the input side of the threshing cage (34), and is connected to said threshing bar (68).

9. Combine harvester (10) with a threshing cage arrangement according to one of Claims 1 to 8 which interacts with a tangentially conveying threshing drum (22) or an axially conveying axial threshing rotor.

## Revendications

1. Agencement de contre-batteur pour une moissonneuse-batteuse (10), comprenant un contre-batteur (34) et un dispositif de traitement de matière récoltée monté en amont du contre-batteur (34), côté entrée, lequel dispositif comporte un corps (66) avec des saillies disposées sur la surface du corps (66), le corps (66) pouvant tourner autour d'un axe de pivotement (86) s'étendant le long du côté entrée du contre-batteur (34) entre une première position, dans laquelle les saillies coopèrent avec de la matière récoltée, et une seconde position, dans laquelle une surface de guidage (70) lisse du corps (66) coopère avec la matière récoltée, et être bloqué dans lesdites positions, et un racloir (84) étant disposé du côté d'entrée du contre-batteur (34), lequel s'étend jusqu'à une position située directement en aval du corps (66), **caractérisé en ce que** le corps (66) est configuré de manière à être espacé par rapport au racloir (84) dans la première position, et à reposer contre le racloir (84) dans la deuxième position.

2. Agencement de contre-batteur selon la revendication 1, dans lequel le corps (66) est configuré de manière à déformer le racloir (84) vers l'extérieur dans sa deuxième position.

3. Agencement de contre-batteur selon la revendication 1 ou 2, dans lequel le corps (66) est configuré de manière à seulement arriver à reposer contre le racloir (84) vers la fin de sa course de réglage dans la deuxième position.

4. Agencement de contre-batteur selon l'une des revendications 1 à 3, dans lequel le corps (66) présente une zone recourbée sur elle-même située en aval, laquelle repose contre le racloir (84) dans la deuxième position et forme la surface de guidage lisse 84, et une zone située en amont, au niveau de laquelle les saillies sont mises en place.

5. Agencement de contre-batteur selon la revendication 4, dans lequel le corps (66) est aplati sur lui-même dans la zone au niveau de laquelle les saillies sont mises en place.

6. Agencement de contre-batteur selon la revendication 4 ou 5, dans lequel, dans sa zone recourbée sur elle-même située en aval, le corps (66) est concentrique par rapport à un axe (88) qui est décalé par rapport à l'axe de pivotement (86).

7. Agencement de contre-batteur selon la revendication 6, dans lequel l'axe (88) est décalé vers l'arrière en direction du flux de matière par rapport à l'axe de pivotement (86).

8. Agencement de contre-batteur selon l'une des revendications précédentes, dans lequel le racloir (84) est réalisé en tant que tôle en forme d'angle dont l'une des branches s'étend tangentiellement à la direction de flux de matière jusqu'à la position située directement en aval du corps (66) et dont l'autre branche s'étend parallèlement à un listeau de battage (68) mis en place du coté d'entrée du contre-batteur (34) et est reliée à ce listeau de battage (68).

9. Moissonneuse-batteuse (10) dotée d'un agencement de contre-batteur selon l'une quelconque des revendications 1 à 8, lequel coopère avec un tambour de battage (22) transportant dans le sens tangentiel ou un rotor de battage axial transportant axialement.
